# EUROPÄISCHE PATENTSCHRIFT

(11) **EP 1 340 607 B1**
(45) Veröffentlichungstag und Bekanntmachung des Hinweises auf die Patenterteilung: **04.05.2005**
(21) Anmeldenummer: 03003012.6
(22) Anmeldetag: 12.02.2003
(51) Int. Cl.: B29C 45/16

(54) **Mehrkomponenten-Spritzgiessmaschine mit variabler Positionierung der sekundären Einspritzeinheit**
Multi-component injection moulding machine with variable positioning of the secondary injection unit
Presse à injecter à plusieurs composants avec un positionnement variable de l'unité d'injection secondaire

(30) Priorität: 26.02.2002 DE 10208269
(43) Veröffentlichungstag der Anmeldung: 03.09.2003
(73) Patentinhaber: Ferromatik Milacron Maschinenbau GmbH, D-79364 Malterdingen (DE)
(72) Erfinder: Koch, Michael, Dr., 79100 Freiburg (DE); Zipse, Rolf, 79312 Emmendingen (DE)
(74) Vertreter: Grättinger & Partner (GbR)

(56) Entgegenhaltungen:
- DE-A- 1 753 852
- DE-A- 4 229 254
- DE-A- 10 055 692
- DE-A- 19 747 573
- JORG DASSOW: "Für alle Fälle gerüstet" KUNSTSTOFFE, September 2002 (2002-09), Seiten 105-109, XP002237523
- PATENT ABSTRACTS OF JAPAN vol. 1995, no. 11, 26. Dezember 1995 (1995-12-26) & JP 07 227875 A (TOYODA GOSEI CO LTD), 29. August 1995 (1995-08-29)

## Beschreibung

Die vorliegende Erfindung betrifft eine Spritzgießmaschine mit einer feststehenden und einer bewegbaren Formaufspannplatte, einer auf die bewegbare Formaufspannplatte wirkenden Schließeinheit und einem Einspritzsystem, welches zwei Einspritzeinheiten, nämlich eine primäre und eine sekundäre Einspritzeinheit umfaßt, wobei der sekundären Einspritzeinheit eine Trageinrichtung zugeordnet ist, welche eine veränderbare Plazierung der sekundären Einspritzeinheit in mindestens zwei unterschiedlichen Arbeitspositionen relativ zur feststehenden Formaufspannplatte gestattet.

Spritzgießmaschinen, deren Einspritzsysteme zwei Einspritzeinheiten umfassen, zählen zum hinlänglich bekannten Stand der Technik. Sie werden in der kunststoffverarbeitenden Industrie insbesondere eingesetzt zur Herstellung von aus mehreren Komponenten gefertigten Spritzgießteilen. Gemäß einer typischen Bauweise ist dabei die primäre Einspritzeinheit im wesentlichen horizontal ausgerichtet und der feststehenden Formaufspannplatte im wesentlichen mittig zugeordnet, d.h. sie spritzt durch einen mittigen Düsendurchbruch der feststehenden Formaufspannplatte in das Werkzeug ein. Die sekundäre Einspritzeinheit ist oberhalb der primären Einspritzeinheit in einer zur feststehenden Formaufspannplatte hin geneigten Lage angeordnet und spritzt durch einen oberhalb des der primären Einspritzeinheit zugeordneten Düsendurchbruchs angeordneten zweiten Düsendurchbruch der feststehenden Formaufspannplatte in das Werkzeug ein.

Bekannt sind desweiteren Spritzgießmaschinen der gattungsgemäßen Art, bei denen die sekundäre Einspritzeinheit in dem Bereich zwischen der feststehenden und der bewegbaren Formaufspannplatte, d.h. oberhalb des Werkzeugeinbauraumes angeordnet ist. Bei diesen Spritzgießmaschinen dient die sekundäre Einspritzeinheit dem Einspritzen des Kunststoffs in die Form in die Trennebene (vgl. DE 1753852 A) bzw. die düsenseitige Formhälfte (vgl. DE 19747573 A1) insbesondere bei Drehtelleranwendungen. Gemäß der DE 1753852 A1, welche eine Spritzgießmaschine der gattungsgemäßeri Art offenbart, läßt sich die sekundäre Einspritzeinheit mittels einer entsprechend ausgeführten Trageinrichtung dergestalt parallel zur Maschinenachse verschieben, daß ihre Achse in Abhängigkeit von dem jeweiligen Werkzeug auf dessen Trennfuge ausgerichtet ist.

Die vorliegende Erfindung hat sich zum Ziel gesetzt, Spritzgießmaschinen der gattungsgemäßen Art im Hinblick auf die Flexibilität zu verbessern. Mit anderen Worten, die vorliegende Erfindung zielt darauf ab, eine Spritzgießmaschine der gattungsgemäßen Art zu schaffen, die sich für ein erweitertes Anwendungspektrum einsetzen läßt, wobei die Umrüstung von einer Anwendung in eine andere mit einem möglichst geringen Aufwand verbunden sein soll.

Gelöst wird diese Aufgabenstellung gemäß der vorliegenden Erfindung dadurch, daß die Trageinrichtung die Anordnung der sekundären Einspritzeinheit in Arbeitspositionen auf zwei unterschiedlichen Seiten der feststehenden Formaufspannplatte ermöglicht. Gegenüber der bekannten Spritzgießmaschine der gattungsgemäßen Art, die, obwohl ihre sekundäre Einspritzeinheit abhängig von dem jeweiligen Werkzeug unterschiedliche Arbeitspositionen einnehmen kann, doch stets nur in einer einzigen grundsätzlichen Konfiguration betrieben werden kann, zeichnet sich die erfindungsgemäße Spritzgießmaschine mit anderen Worten durch die Lagerung der sekundären Einspritzeinheit mittels einer solchen Trageinrichtung aus, daß die sekundäre Einspritzeinheit mindestens zwei auf unterschiedlichen Seiten der feststehenden Formaufspannplatte angeordnete und somit unterschiedliche Maschinenkonfigurationen definierende unterschiedliche Arbeitspositionen einnehmen kann. Hierdurch zeichnet sich die erfindungsgemäße Spritzgießmaschine durch ein besonders hohes Maß an Flexibilität hinsichtlich ihrer Einsatzmöglichkeiten aus. In diesem Sinne kann, wie dies weiter unten in größerem Detail erläutert wird, in Anwendung der vorliegenden Erfindung die sekundäre Einspritzeinheit in Abhängigkeit von dem jeweiligen Anwendungsfall der Spritzgießmaschine auf unterschiedlichen Seiten der feststehenden Formaufspannplatte angeordnet werden, wobei infolge der erfindungsgemäß vorgesehenen, umstellbaren Trageinrichtung eine entsprechende Umrüstung der Spritzgießmaschine mit einem nur minimalen Aufwand verbunden ist.

In diesem Falle läßt sich die sekundäre Einspritzeinheit ein und derselben Spritzgießmaschine für alle gängigen Anwendungsmöglichkeiten einsetzen, ohne daß die Umrüstung von einer Konfiguration in eine andere mit einem übermäßig hohen Aufwand verbunden wäre. Besonders bevorzugt umfaßt in diesem Falle die der sekundären Einspritzeinheit zugeordnete Trageinrichtung horizontale Führungen und ein auf diesen verfahrbares Gerüst, an welchem die sekundäre Einspritzeinheit gelagert ist. Die horizontalen Führungen können dabei insbesondere an der Oberkante der feststehenden Formaufspannplatte montiert sein.

Zweckmäßigerweise ist der sekundären Einspritzeinheit eine Aushubeinrichtung zugeordnet, mit welcher sich die sekundäre Einspritzeinheit aus jeweils einer Arbeitsposition in eine zugeordnete Wartungsposition bringen läßt, in der insbesondere das Reinigen der der sekundären Einspritzeinheit zugeordneten Düse möglich ist.

Befindet sich die sekundäre Einspritzeinheit demgegenüber in einer ihrer Arbeitspositionen, so sorgt die Aushubeinrichtung für eine ausreichend hohe Düsenanlagekraft an das Werkzeug bzw. die sonstige nachgeschaltete Komponente (z.B. Mischkopf) des Einspritzsystems.

Eine bevorzugte Weiterbildung der Erfindung zeichnet sich dadurch aus, daß die sekundäre Einspritzeinheit in mindestens einer ihrer Arbeitspositionen im wesentlichen vertikal ausgerichtet ist. Eine solche vertikale Orientierung der sekundären Einspritzeinheit eignet sich sogar für mehrere besonders typische Konfigurationen des Einspritzsystems. Zum einen kann die sekundäre Einspritzeinheit in diesem Falle einen zweiten Anspritzpunkt in der Düsenplatte bedienen, insbesondere wenn dieser oberhalb des der primären Einspritzeinheit zugeordneten Anspritzpunktes angeordnet ist; bevorzugt ist dabei der sekundären Einspritzeinheit ein Umlenkkopf mit einem Heißkanal zugeordnet. Desweiteren eignet sich diese Arbeitsposition der sekundären Einspritzeinheit für den Anschluß an einen Mischkopf für Gegentaktspritzen und Marmorieren; zur Umrüstung der erfindungsgemäßen Spritzgießmaschine von der vorstehend erläuterten ersten Konfiguration in diese zweite Konfiguration genügt es, den Umlenkkopf zu entfernen und die sekundäre Einspritzeinheit an einen der primären Einspritzeinheit zugeordneten Mischkopf anzuschließen. Schließlich läßt sich die sekundäre Einspritzeinheit in dieser Arbeitsposition an einen der primären Einspritzeinheit zugeordneten Düsenkörper für geschichtetes Spritzgießen anschließen; die sekundäre Einspritzeinheit übernimmt in diesem Falle die Funktionen eines Monosandwich-Extruders, indem sie plastifizierten Kunststoff in die primäre Einspritzeinheit extrudiert.

Gemäß einer bevorzugten Weiterbildung der Erfindung ist vorgesehen, daß die feststehende Formaufspannplatte zwei im wesentlichen übereinander angeordnete Düsendurchbrüche aufweist, von denen die obere der sekundären Einspritzeinheit zugeordnet ist. Diese Konfiguration erweist sich als besonders vorteilhaft, was die Möglichkeiten der Veränderung der Arbeitspositionen der sekundären Einspritzeinheit und deren Einbindung in die übrigen Komponenten des Einspritzsystems angeht. Zwingend ist indessen auch diese Anordnung der beiden Düsendurchbrüche übereinander nicht; vielmehr kann sich unter Berücksichtigung der spezifischen Anforderungen auch eine Anordnung der beiden Düsendurchbrüche im wesentlichen nebeneinander oder aber schräg übereinander als günstig herausstellen.

Im Bedarfsfalle kann vorgesehen sein, daß sich die Orientierung der sekundären Einspritzeinheit in ihrer Arbeitsposition benachbart zu der primären Einspritzeinheit von einer vertikalen Orientierung in eine horizontale Orientierung verändern läßt.

In den meisten Anwendungsfällen reicht es aus, wenn von den beiden Einspritzeinheiten des Einspritzsystems nur eine lageveränderbar gelagert ist. Insoweit zeichnet sich eine unter wirtschaftlichen Gesichtspunkten besonders bevorzugte Weiterbildung der Erfindung dadurch aus, daß die Arbeitspositionen der primären Einspritzeinheit nicht veränderbar ist. Die primäre Einspritzeinheit kann dabei insbesondere im wesentlichen horizontal ausgerichtet und der feststehenden Formaufspannplatte im wesentlichen mittig zugeordnet sein. Zwingend erforderlich ist dies indessen nicht; vielmehr können sich unter Berücksichtigung der spezifischen Anforderungen auch andere Konfigurationen der erfindungsgemäßen Spritzgießmaschine als günstig erweisen.

Im folgenden wird die vorliegende Erfindung anhand eines in der Zeichnung dargestellten Ausführungsbeispiels einer Spritzgießmaschine nach der vorliegenden Erfindung näher erläutert. Dabei veranschaulicht die Zeichnung das Einspritzsystem der entsprechenden Spritzgießmaschine in vier verschiedenen Konfigurationen. Es zeigt:
- Fig. 1: in perspektivischer Ansicht das Einspritzsystem in einer ersten Konfiguration,
- Fig. 2: das Einspritzsystem in der Konfiguration nach Fig. 1 im Vertikalschnitt,
- Fig. 3: in perspektivischer Ansicht das Einspritzsystem in einer zweiten Konfiguration,
- Fig. 4: das Einspritzsystem in einer dritten Konfiguration im Vertikalschnitt,
- Fig. 5: das Einspritzsystem in einer vierten Konfiguration in Frontansicht und
- Fig. 6: das Einspritzsystem in der Konfiguration nach Fig. 5 in Seitenansicht.

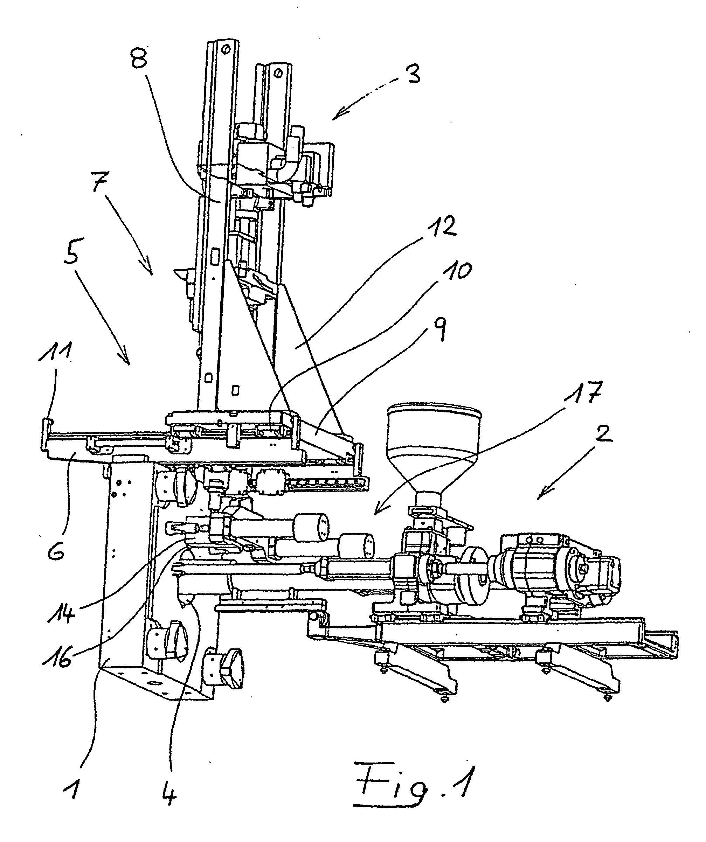

Gemäß Fig. 1 umfaßt das der feststehenden Formaufspannplatte 1 zugeordnete Einspritzsystem eine erste, primäre Einspritzeinheit 2 und eine zweite, sekundäre Einspritzeinheit 3. Die primäre Einspritzeinheit 2 ist in als solches bekannter Weise ausgeführt. Sie ist im wesentlichen horizontal ausgerichtet und einem in der feststehenden Formaufspannplatte 1 im wesentlichen mittig angeordneten Düsendurchbruch 4 zugeordnet. Da die primäre Einspritzeinheit 2 des in der Zeichnung veranschaulichten Einspritzsystems dem hinlänglich bekannten Stand der Technik entspricht, bedarf es an dieser Stelle keiner weitergehenden Ausführungen.

Die sekundäre Einspritzeinheit 3 ist in einer Trageinrichtung 5 gelagert. Diese umfaßt zwei horizontale Führungen 6, die mit der Oberkante der feststehenden Formaufspannplatte 1 durch Schrauben fest verbunden sind, und ein auf den beiden Führungen 6 verschiebbar geführtes Gerüst 7. Das Gerüst 7 weist dabei zwei vertikal aufragende Träger 8 auf, welche auf einer Basisplatte 9 montiert sind, die sich ihrerseits über vier auf den beiden Führungen 6 verschiebbar geführten Schlitten 10 auf den Führungen 6 abstützt. Endanschläge 11 begrenzen den Verschiebeweg des Gerüsts 7 auf den Führungen 6. Das Gerüst 7 ist mittels zweier jeweils mit einem Träger 8 einerseits und der Basisplatte 9 andererseits verbundenen Platten 12 ausgesteift. In den beiden Trägern 8 ist die in einer als solches bekannten Bauart ausgeführte sekundäre Einspritzeinheit 3 in vertikaler Orientierung gelagert.

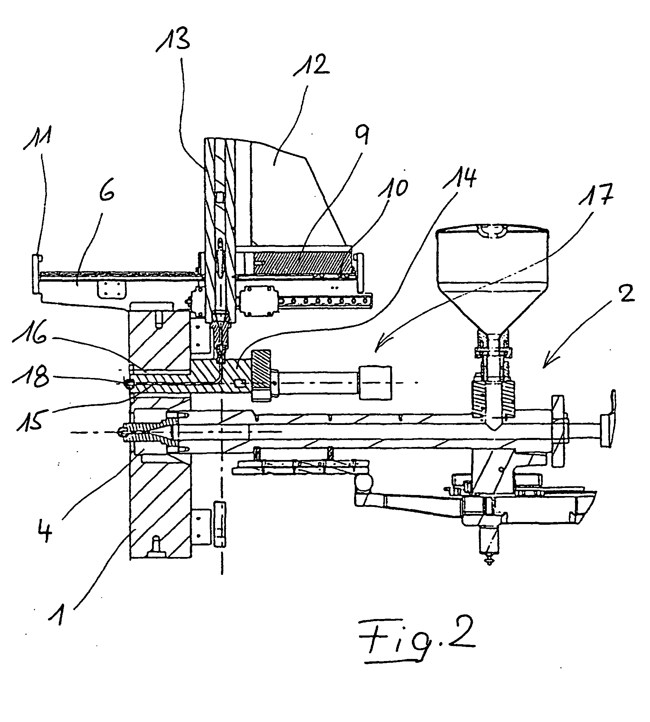

Der Schneckenzylinder 13 der sekundären Einspritzeinheit 3 ist bei der in den Figuren 1 und 2 veranschaulichten Konfiguration an einen 90°-Umlenkkopf 14 mit einem Heißkanal 15 angeschlossen. Der Umlenkkopf 14 ragt dabei in einen zweiten Düsendurchbruch 16 hinein, welcher oberhalb des der primären Einspritzeinheit 2 zugeordneten, an der feststehenden Formaufspannplatte 1 mittig angeordneten Düsendurchbruchs 4 angeordnet ist. An dem Umlenkkopf 14 greift eine Aushubeinrichtung 17 an, welche sich an der feststehenden Formaufspannplatte 1 abstützt. Mittels dieser Aushubeinrichtung 17 läßt sich der Umlenkkopf 14 horizontal verschieben, um die dem Umlenkkopf 14 zugeordnete Düse 18 zu Wartungszwekken vom Werkzeug abzuheben; dem Abheben der Düse 18 vom Werkzeug entspricht dabei eine korrespondierende Verschiebebewegung der sekundären Einspritzeinheit 3 gemeinsam mit dem zugeordneten Gerüst 7 aus in der Arbeitsstellung in die Wartungsstellung.

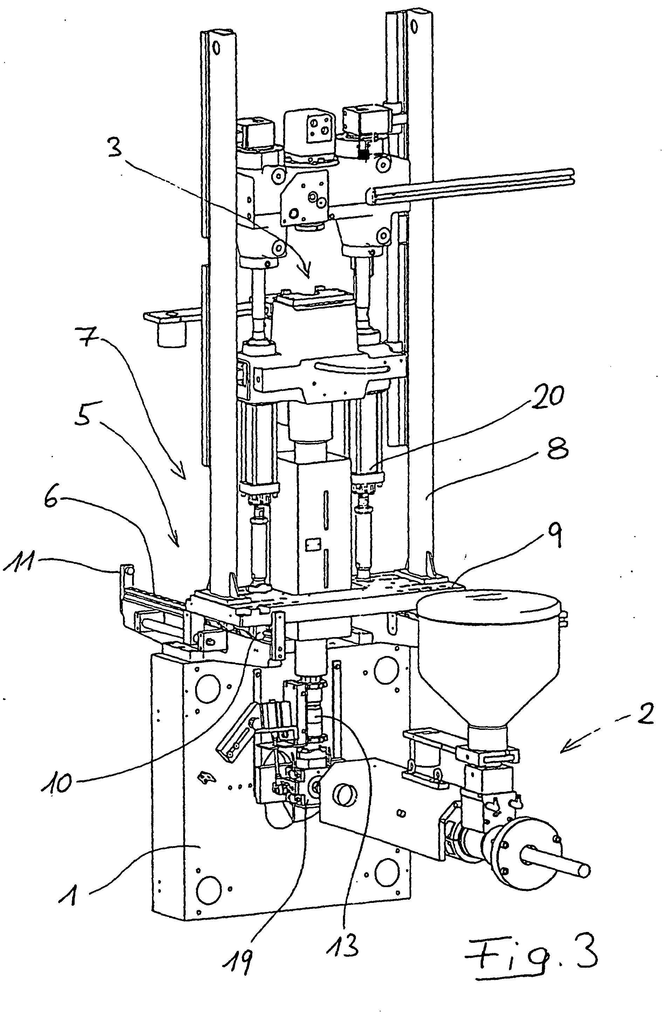

Fig. 3 veranschaulicht eine Spritzgießmaschine, die hinsichtlich ihrer grundsätzlichen Bauart und ihrer grundlegenden Konstruktionsmerkmale der in den Fig. 1 und 2 gezeigten Spritzgießmaschine entspricht, die jedoch hinsichtlich einiger konstruktiver Details gegenüber der Spritzgießmaschine nach den Figuren 1 und 2 abgewandelt ist. Der im Hinblick auf die vorliegende Erfindung maßgebliche Unterschied der in Fig. 3 veranschaulichten Konfigurationen des Einspritzsystems gegenüber der Konfiguration nach den Fig. 1 und 2 besteht darin, daß die sekundäre Einspritzeinheit 3 hier statt an einen Umlenkkopf an einen zur Durchführung des Monosandwich-Verfahrens geeigneten Düsenkörper 19 angeschlossen ist. Durch die Trageinrichtung 7, welche ein horizontales Verfahren der sekundären Einspritzeinheit 3 relativ zur feststehenden Formaufspannplatte 1 und zur primären Einspritzeinheit 2 gestattet, sowie durch die vertikale Verschiebbarkeit der sekundären Einspritzeinheit 3 mittels der Antriebe 20 lassen sich bei einer Umrüstung zwischen den beiden Konfigurationen des Einspritzsystems unterschiedliche Geometrien des Umlenkkopfes 14 (Fig. 1 und 2) und des Monosandwich-Düsenkörpers 19 und des jeweiligen Anschlusses für die sekundäre Einspritzeinheit 3 ohne jeden Aufwand ausgleichen.

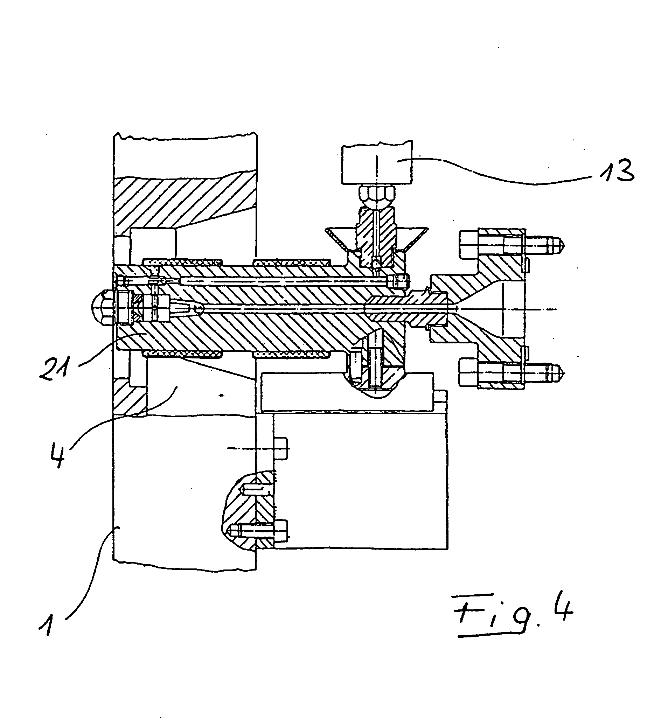

Fig. 4 veranschaulicht die Situation, wenn bei der in den Fig. 1 und 2 bzw. der in Fig. 3 dargestellten Spritzgießmaschine statt des Umlenkkopfes 14 bzw. des Monosandwich-Düsenkörpers 19 ein für Gegentaktspritzen und Marmorieren ausgelegter Mischkopf 21 vorgesehen ist, durch welchen sowohl die erste Einspritzeinheit 2 als auch die zweite Einspritzeinheit 3 durch den zentralen Düsendurchbruch 4 der feststehenden Formaufspannplatte 1 in das Werkzeug einspritzen. Wiederum ist erkennbar, daß durch die Trageinrichtung 7, welche ein horizontales Verfahren der sekundären Einspritzeinheit 3 relativ zur feststehenden Formaufspannplatte 1 und zur primären Einspritzeinheit 2 gestattet, sowie durch die vertikale Verschiebbarkeit der sekundären Einspritzeinheit 3 mittels der Antriebe 20 sich bei einer Umrüstung der in den Fig. 1 und 2 bzw. der in Fig. 3 veranschaulichten Spritzgießmaschine in die Konfiguration des Einspritzsystems nach Fig. 4 unterschiedliche Geometrien des Umlenkkopfes 14 (Fig. 1 und 2) bzw. des Monosandwich-Düsenkörpers 19 und des Mischkopfes 21 und des jeweiligen Anschlusses für die sekundäre Einspritzeinheit 3 ohne jeden Aufwand ausgleichen lassen.

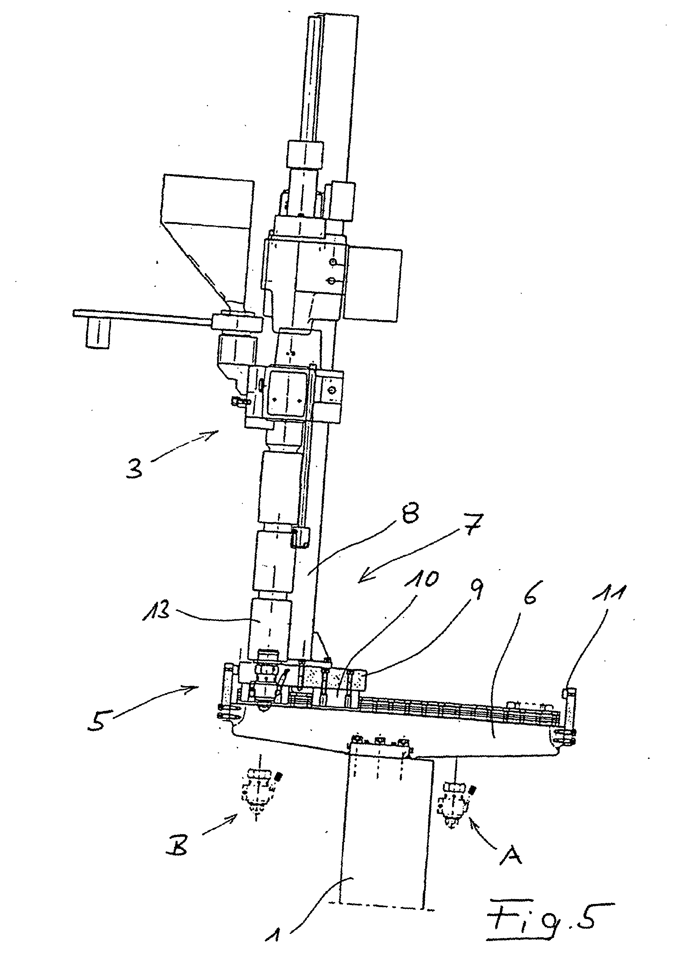

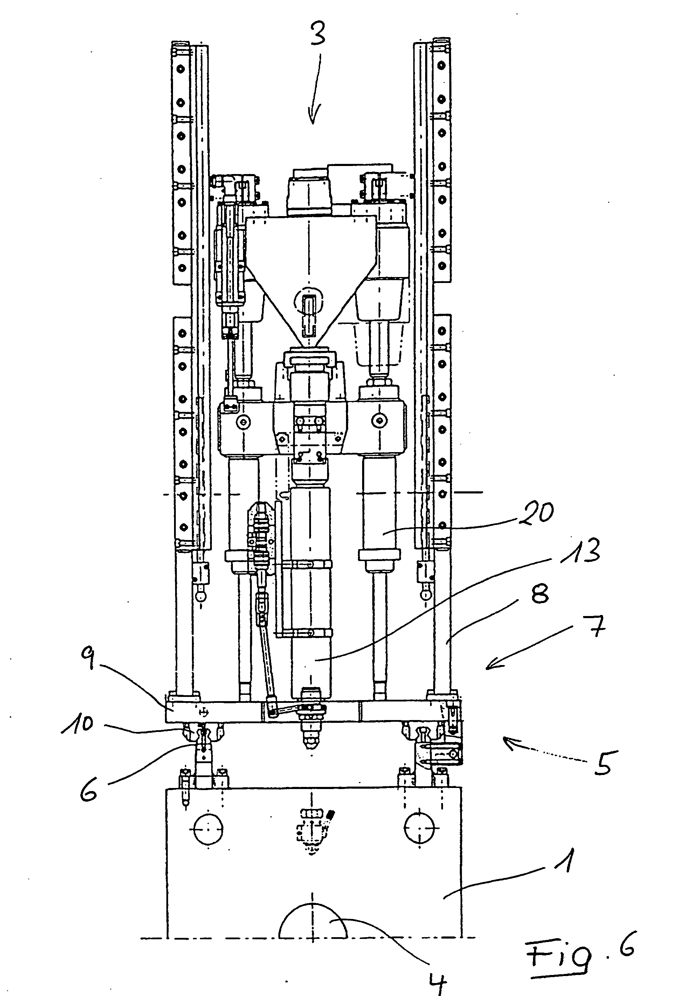

Selbst die in den Fig. 5 und 6 dargestellte vierte Konfiguration des Einspritzsystems läßt sich bei den in den Fig. 1 und 2, 3 bzw. 4 veranschaulichten Spritzgießmaschinen ohne nennenswerten Umrüstaufwand herleiten, und zwar dank der Lagerung der sekundären Einspritzeinheit 3 in einem Gerüst 7, welches auf den Führungen 6 dergestalt horizontal verschiebbar geführt ist, daß die Achse der vertikal orientierten sekundären Einspritzeinheit 3 nicht nur, wie dies gemäß den Fig. 1 bis 4 der Fall ist, auf derselben Seite der feststehenden Formaufspannplatte 1 angeordnet ist wie die primäre Einspritzeinheit 2 (Position A), sondern auch, wie dies für die Konfiguration nach den Figuren 5 und 6 zutrifft, in dem Bereich zwischen der feststehenden Formaufspannplatte 1 und der bewegbaren Formaufspannplatte, d. h. oberhalb des Werkzeugeinbauraums (Position B).

## Patentansprüche

1. Spritzgießmaschine mit einer feststehenden (1) und einer bewegbaren Formaufspannplatte, einer auf die bewegbare Formaufspannplatte wirkenden Schließeinheit und einem Einspritzsystem, welches zwei Einspritzeinheiten, nämlich eine primäre (2) und eine sekundäre (3) Einspritzeinheit umfaßt, wobei der sekundären Einspritzeinheit (3) eine Trageinrichtung (5) zugeordnet ist, welche eine veränderbare Plazierung der sekundären Einspritzeinheit in mindestens zwei unterschiedlichen Arbeitspositionen relativ zur feststehenden Formaufspannplatte (1) gestattet,
**dadurch gekennzeichnet,**
**daß** die Trageinrichtung (5) die Anordnung der sekundären Einspritzeinheit (3) in Arbeitspositionen auf zwei unterschiedlichen Seiten der feststehenden Formaufspannplatte (1) ermöglicht, und daß die feststehende Formaufspannplatte (1) zwei Düsendurchbrüche (4, 16) aufweist, von denen einer der primären Einspritzeinheit (2) und der andere der sekundären Einspritzeinheit (3) zugeordnet ist.

2. Spritzgießmaschine nach Anspruch 1,
**dadurch gekennzeichnet,**
**daß** die Arbeitsposition der primären Einspritzeinheit (2) nicht veränderbar ist.

3. Spritzgießmaschine nach Anspruch 2,
**dadurch gekennzeichnet,**
**daß** die primäre Einspritzeinheit (2) im wesentlichen horizontal ausgerichtet und der feststehenden Formaufspannplatte (1) im wesentlichen mittig zugeordnet ist.

4. Spritzgießmaschine nach einem der Ansprüche 1 bis 3,
**dadurch gekennzeichnet,**
**daß** die beiden Düsendurchbrüche (4, 16) in der feststehenden Formaufspannplatte (1) im wesentlichen übereinander angeordnet sind, wobei der obere Düsendurchbruch (16) der sekundären Einspritzeinheit (3) zugeordnet ist.

5. Spritzgießmaschine nach einem der Ansprüche 1 bis 4,
**dadurch gekennzeichnet,**
**daß** die sekundäre Einspritzeinheit (3) in mindestens einer der Arbeitspositionen im wesentlichen vertikal ausgerichtet ist.

6. Spritzgießmaschine nach Anspruch 5,
**dadurch gekennzeichnet**
**daß** der sekundären Einspritzeinheit ein Umlenkkopf (14) mit einem Heißkanal (15) zugeordnet ist.

7. Spritzgießmaschine nach einem der Ansprüche 1 bis 6,
**dadurch gekennzeichnet,**
**daß** der sekundären Einspritzeinheit (3) eine horizontal wirkende Aushubeinrichtung (17) zugeordnet ist.

8. Spritzgießmaschine nach einem der Ansprüche 1 bis 7,
**dadurch gekennzeichnet,**
**daß** die Trageinrichtung (5) horizontale Führungen (6) und ein auf diesen verfahrbares Gerüst (7) umfaßt.

9. Spritzgießmaschine nach Anspruch 8,
**dadurch gekennzeichnet,**
**daß** die horizontalen Führungen (6) mit der Oberkante der feststehenden Formaufspannplatte (1) fest verbunden sind.

10. Spritzgießmaschine nach einem der Ansprüche 1 bis 9,
**dadurch gekennzeichnet,**
**daß** die sekundäre Einspritzeinheit (3) an einen der primären Einspritzeinheit (2) zugeordneten Mischkopf (21) anschließbar ist.

## Claims

1. An injection moulding machine with a fixed (1) and a movable mould clamping plate, a closure unit acting on the movable mould clamping plate and an injection system which comprises two injection units, namely a primary (2) and a secondary (3) injection unit, wherein associated with the secondary injection unit (3) is a carrier device (5), which allows a variable placing of the secondary injection unit in at least two different working positions relative to the fixed mould clamping plate (1),
**characterised in that**
the carrying device (5) makes it possible to arrange the secondary injection unit (3) in working positions on two different sides of the fixed mould clamping plate (1) and that the fixed mould clamping plate (1) has two nozzle openings (4, 16) of which one is associated with the primary injection unit (2) and the other is associated with the secondary injection unit (3).

2. The injection moulding machine according to claim 1,
**characterised in that**
the working position of the primary injection unit (2) is not variable.

3. The injection moulding machine according to claim 2,
**characterised in that**
the primary injection unit (2) is aligned substantially horizontally and is associated substantially centrally with the fixed moulding clamping plate (1).

4. The injection moulding machine according to any one of claims 1 to 3,
**characterised in that**
the two nozzle openings (4, 16) are arranged substantially one above one another in the fixed mould clamping plate (1), wherein the upper nozzle opening (16) is associated with the secondary injection unit (3).

5. The injection moulding machine according to any one of claims 1 to 4,
**characterised in that**
the secondary injection unit (3) is aligned substantially vertically in at least one of the working positions.

6. The injection moulding machine according to claim 5,
**characterised in that**
a deflecting head (14) with a heating channel (15) is associated with the secondary injection unit.

7. The injection moulding machine according to any one of claims 1 to 6,
**characterised in that**
a horizontally acting lifting-out device (17) is associated with the secondary injection unit (3).

8. The injection moulding machine according to any one of claims 1 to 7,
**characterised in that**
the carrying device (5) comprises horizontal guides (6) and a frame (7) which is displaceable thereon.

9. The injection moulding machine according to claim 8,
**characterised in that**
the horizontal guides (6) are fixedly connected to the upper edge of the fixed mould clamping plate (1).

10. The injection moulding machine according to any one of claims 1 to 9,
**characterised in that**
the secondary injection unit (3) is connectable to a mixing head (21) associated with the primary injection unit (2).

## Revendications

1. Presse à injecter comportant un plateau porte-moule fixe (1) et un plateau porte-moule mobile, une unité de fermeture agissant sur le plateau porte-moule mobile et un système d'injection, lequel comprend deux unités d'injection, notamment une unité d'injection primaire (2) et secondaire (3), dans lequel un dispositif de support (5) est coordonné à l'unité d'injection secondaire (3), lequel permet un positionnement variable de l'unité d'injection secondaire à au moins deux positions de travail différentes par rapport au plateau porte-moule fixe (1),
**caractérisée en ce que**
le dispositif de support (5) permet la disposition de l'unité d'injection secondaire (3) à des positions de travail sur deux côtés différents du plateau porte-moule fixe (1), et **en ce que** le plateau porte-moule fixe (1) présente deux fentes de buses (4,16), dont une est coordonnée à l'unité d'injection primaire (2) et l'autre est coordonnée à l'unité d'injection secondaire (3).

2. Presse à injecter selon la revendication 1,
**caractérisée en ce que**
la position de travail de l'unité d'injection primaire (2) n'est pas variable.

3. Presse à injecter selon la revendication 2,
**caractérisée en ce que**
l'unité d'injection primaire (2) est orientée essentiellement horizontalement et le plateau porte-moule fixe (1) est coordonné essentiellement au centre.

4. Presse à injecter selon une des revendications 1 à 3,
**caractérisée en ce que**
les deux fentes de buse (4,16) sont disposées essentiellement l'une au dessus de l'autre dans le plateau porte-moule fixe (1), moyennant quoi la fente de buse supérieure (16) est coordonnée à l'unité d'injection (3) secondaire.

5. Presse à injecter selon une des revendications 1 à 4,
**caractérisée en ce que**
l'unité d'injection secondaire (3) est orientée essentiellement verticalement à au moins une des positions de travail.

6. Presse à injecter selon la revendication 5,
**caractérisée en ce que**
une filière en équerre (14) comportant un canal chauffant(15) est coordonnée à l'unité d'injection secondaire.

7. Presse à injecter selon une des revendications 1 à 6,
**caractérisée en ce que**
un dispositif de déblaiement (17) fonctionnant horizontalement est coordonné à l'unité d'injection secondaire (3).

8. Presse à injecter selon une des revendications 1 à 7,
**caractérisé en ce que**
le dispositif de support (5) comprend des guides horizontaux (6) et un bâti (7) qui peut être déplacé sur ces derniers.

9. Presse à injecter selon la revendication 8,
**caractérisée en ce que**
les guides horizontaux (6) sont reliés solidement à l'arête supérieure du plateau porte-moule fixe (1).

10. Presse à injecter selon une des revendications 1 à 9,
**caractérisée en ce que**
l'unité d'injection secondaire (3) est raccordée à une tête de mélange (21) coordonnée à l'unité d'injection primaire (2).
